(19) **Europäisches Patentamt**
**European Patent Office**
**Office européen des brevets**

(11) **EP 4 686 139 A1**

(12) **EUROPEAN PATENT APPLICATION**

(43) Date of publication:
**28.01.2026 Bulletin 2026/05**

(21) Application number: **25191291.1**

(22) Date of filing: **23.07.2025**

(51) International Patent Classification (IPC):
**H04L 7/04** (2006.01) **H04L 1/20** (2006.01)

(52) Cooperative Patent Classification (CPC):
**H04L 7/042**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **25.07.2024 US 202418784036**

(71) Applicant: **Nokia Solutions and Networks Oy**
**02610 Espoo (FI)**

(72) Inventors:
- **Mahadevan, Amitkumar**
  **Edison, 08837 (US)**
- **Lefevre, Yannick**
  **3001 Heverlee (BE)**
- **Van Hoof, Werner**
  **2630 Aartselaar (BE)**
- **Schelfhout, Koenraad**
  **2070 Zwijndrecht (BE)**
- **Buwalda, Sake**
  **1930 Zaventem (BE)**

(74) Representative: **Ipsilon Belgium**
**Bellevue 5/501**
**9050 Gent-Ledeberg (BE)**

(54) **BURST DELINEATION FOR BURST MODE COMMUNICATIONS**

(57) Various example embodiments for supporting burst mode communications in an optical communication system may be configured to support burst mode communications based on use of a burst delineation scheme for burst detection. The burst delineation scheme may be based on detection of a delimiter in a burst mode transmission based on selecting, from a received bit stream, a first and second sets of bits, computing first and second error statistics on the first and second sets of bits, computing one or more error metrics based on one or more linear combinations of the first and second error statistics, and determining, based on one or more comparisons based on the one or more error metrics and one or more error thresholds, whether the received bit stream includes a delimiter. The burst delineation scheme for burst detection may be used for burst detection within various types of optical communication networks, including passive optical networks.

FIG. 8

## Description

## TECHNICAL FIELD

Various example embodiments relate generally to communication systems and, more particularly but not exclusively, to supporting optical communications in optical communication systems.

## BACKGROUND

Various communications technologies may be used to support communications in various types of communication systems.

## SUMMARY

The scope of protection sought for various example embodiments is set out by the independent claims. The embodiments and features described in this specification that do not fall within the scope of the independent claims, if any, are to be interpreted as examples useful for understanding various example embodiments.

Amongst others, it is an object of example embodiments to support burst mode communications in an optical communication system such as for example a Passive Optical Network, also referred to as PON, for example to provide improved burst detection for burst mode communications.

This object is achieved, n at least some example embodiments, by an apparatus including at least one processor and at least one memory storing instructions which, when executed by the at least one processor, cause the apparatus at least to select, from a received bit stream, a first set of bits and a second set of bits, compute a first error statistic on the first set of bits and a second error statistic on the second set of bits, compute one or more error metrics based on one or more linear combinations of the first error statistic and the second error statistic, wherein, for at least one of the one or more linear combinations of the first error statistic and the second error statistic, respective coefficients for the first error statistic and the second error statistic are different, and determine, based on one or more comparisons based on the one or more error metrics and one or more error thresholds, whether the received bit stream includes a delimiter. In at least some example embodiments, at least one of the one or more linear combinations of the first error statistic and the second error statistic is computed as A*N1 + B*N2, wherein N1 is the first error statistic, N2 is the second error statistic, A is the respective coefficient for the first error statistic, and B is the respective coefficient for the second error statistic. In at least some example embodiments, the first set of bits and the second set of bits are non-overlapping. In at least some example embodiments, the first set of bits and the second set of bits are selected based on de-interleaving of the received bit stream. In at least some example embodiments, the first error statistic comprises a count of a number of errors in the first set of bits and the second error statistic comprises a count of a number of errors in the second set of bits. In at least some example embodiments, the one or more error metrics comprises a first error metric equal to the count of the number of errors in the first set of bits and a second error metric equal to the count of the number of errors in the second set of bits. In at least some example embodiments, the one or more error thresholds comprises a first error threshold and a second error threshold, wherein the one or more comparisons comprises a first comparison of the first error metric with the first error threshold and a second comparison of the second error metric with the second error threshold. In at least some example embodiments, the one or more error metrics comprises a first error metric computed based on a first linear combination of the first error statistic and the second error statistic which is computed as A*N1 + B*N2, wherein N1 is the first error statistic, N2 is the second error statistic, A is a first coefficient for the first error statistic and is nonzero, and B is a first coefficient for the second error statistic and is zero, and a second error metric computed based on a second linear combination of the first error statistic and the second error statistic computed as C*N1 + D*N2, wherein N1 is the first error statistic, N2 is the second error statistic, C is a second coefficient for the first error statistic and is zero, and D is a second coefficient for the second error statistic and is nonzero. In at least some example embodiments, the first set of bits and the second set of bits are overlapping. In at least some example embodiments, the first error statistic comprises a number of errors and the second error statistic comprises a number of consecutive bit error pairs. In at least some example embodiments, the delimiter has a length of N, wherein the received bit stream includes a set of N bits, wherein the first error statistic is computed by counting a number of bit errors over N-1 bits of the set of N bits, wherein the second error statistic is computed by counting a number of consecutive bit error pairs over the set of N bits. In at least some example embodiments, the respective coefficients for the first error statistic and the second error statistic are computed based on parameters of a model configured for modeling error behavior. In at least some example embodiments, the model configured for modeling error behavior comprises a Gilbert-Elliot (GE) model. In at least some example embodiments, the one or more error metrics comprises an error metric computed based on A*N1 + B*N2, wherein N1 is the first error statistic, N2 is the second error statistic, A is the respective coefficient for the first error statistic, and B is the respective coefficient for the second error statistic. In at least some example embodiments, the one or more error metrics comprises an error metric computed based on a function of at least one of the one or more linear combinations of the first error statistic and the second error statistic. In at least some example embodiments, the function is computed as $f = [A*N1 + B*N2]^2$, wherein N1 is the first error statistic, N2 is the second error statistic, A is the respective coefficient for the first error statistic, and B is the respective coefficient for the second error statistic. In at least some example embodiments, the function is computed as $f = [A*N1 + B*N2] + C$, wherein N1 is the first error statistic, N2 is the second error statistic, A is the respective coefficient for the first error statistic, and B is the respective coefficient for the second error statistic, and C is a constant.

In at least some example embodiments, a computer-readable storage medium stores computer program instructions which, when executed by an apparatus, cause the apparatus at least to select, from a received bit stream, a first set of bits and a second set of bits, compute a first error statistic on the first set of bits and a second error statistic on the second set of bits, compute one or more error metrics based on one or more linear combinations of the first error statistic and the second error statistic, wherein, for at least one of the one or more linear combinations of the first error statistic and the second error statistic, respective coefficients for the first error statistic and the second error statistic are different, and determine, based on one or more comparisons based on the one or more error metrics and one or more error thresholds, whether the received bit stream includes a delimiter. In at least some example embodiments, at least one of the one or more linear combinations of the first error statistic and the second error statistic is computed as $A*N1 + B*N2$, wherein N1 is the first error statistic, N2 is the second error statistic, A is the respective coefficient for the first error statistic, and B is the respective coefficient for the second error statistic. In at least some example embodiments, the first set of bits and the second set of bits are non-overlapping. In at least some example embodiments, the first set of bits and the second set of bits are selected based on de-interleaving of the received bit stream. In at least some example embodiments, the first error statistic comprises a count of a number of errors in the first set of bits and the second error statistic comprises a count of a number of errors in the second set of bits. In at least some example embodiments, the one or more error metrics comprises a first error metric equal to the count of the number of errors in the first set of bits and a second error metric equal to the count of the number of errors in the second set of bits. In at least some example embodiments, the one or more error thresholds comprises a first error threshold and a second error threshold, wherein the one or more comparisons comprises a first comparison of the first error metric with the first error threshold and a second comparison of the second error metric with the second error threshold. In at least some example embodiments, the one or more error metrics comprises a first error metric computed based on a first linear combination of the first error statistic and the second error statistic which is computed as $A*N1 + B*N2$, wherein N1 is the first error statistic, N2 is the second error statistic, A is a first coefficient for the first error statistic and is nonzero, and B is a first coefficient for the second error statistic and is zero, and a second error metric computed based on a second linear combination of the first error statistic and the second error statistic computed as $C*N1 + D*N2$, wherein N1 is the first error statistic, N2 is the second error statistic, C is a second coefficient for the first error statistic and is zero, and D is a second coefficient for the second error statistic and is nonzero. In at least some example embodiments, the first set of bits and the second set of bits are overlapping. In at least some example embodiments, the first error statistic comprises a number of errors and the second error statistic comprises a number of consecutive bit error pairs. In at least some example embodiments, the delimiter has a length of N, wherein the received bit stream includes a set of N bits, wherein the first error statistic is computed by counting a number of bit errors over N-1 bits of the set of N bits, wherein the second error statistic is computed by counting a number of consecutive bit error pairs over the set of N bits. In at least some example embodiments, the respective coefficients for the first error statistic and the second error statistic are computed based on parameters of a model configured for modeling error behavior. In at least some example embodiments, the model configured for modeling error behavior comprises a Gilbert-Elliot (GE) model. In at least some example embodiments, the one or more error metrics comprises an error metric computed based on $A*N1 + B*N2$, wherein N1 is the first error statistic, N2 is the second error statistic, A is the respective coefficient for the first error statistic, and B is the respective coefficient for the second error statistic. In at least some example embodiments, the one or more error metrics comprises an error metric computed based on a function of at least one of the one or more linear combinations of the first error statistic and the second error statistic. In at least some example embodiments, the function is computed as $f = [A*N1 + B*N2]^2$, wherein N1 is the first error statistic, N2 is the second error statistic, A is the respective coefficient for the first error statistic, and B is the respective coefficient for the second error statistic. In at least some example embodiments, the function is computed as $f = [A*N1 + B*N2] + C$, wherein N1 is the first error statistic, N2 is the second error statistic, A is the respective coefficient for the first error statistic, and B is the respective coefficient for the second error statistic, and C is a constant.

In at least some example embodiments, a method includes selecting, from a received bit stream, a first set of bits and a second set of bits, computing a first error statistic on the first set of bits and a second error statistic on the second set of bits, computing one or more error metrics based on one or more linear combinations of the first error statistic and the second error statistic, wherein, for at least one of the one or more linear combinations of the first error statistic and the second error statistic, respective coefficients for the first error statistic and the second error statistic are different, and determining, based on one or more comparisons based on the one or more error metrics and one or more error thresholds, whether the received bit stream includes a delimiter. In at least some example embodiments, at least one of the one or more linear combinations of the first error statistic and the second error statistic is computed as $A*N1 + B*N2$, wherein N1 is the first error statistic, N2 is the second error statistic, A is the respective coefficient for the first error statistic, and B is the respective coefficient for the second error statistic. In at least some example embodiments, the first set of bits and the second set of bits are non-overlapping. In at least some example embodiments, the first set of bits and the second set of bits are selected based on de-interleaving of the received bit stream. In at least some example embodiments, the first error statistic comprises a count of a number of errors in the first set of bits and the second error statistic comprises a count of a number of errors in the second set of bits. In at least some example embodiments, the one or more error metrics comprises a first error metric equal to the count of the number of errors in the first set of bits and a second error metric equal to the count of the number of errors in the second set of bits. In at least some example embodiments, the one or more error thresholds comprises a first error threshold and a second error threshold, wherein the one or more comparisons comprises a first comparison of the first error metric with the first error threshold and a second comparison of the second error metric with the second error threshold. In at least some example embodiments, the one or more error metrics comprises a first error metric computed based on a first linear combination of the first error statistic and the second error statistic which is computed as $A*N1 + B*N2$, wherein N1 is the first error statistic, N2 is the second error statistic, A is a first coefficient for the first error statistic and is nonzero, and B is a first coefficient for the second error statistic and is zero, and a second error metric computed based on a second linear combination of the first error statistic and the second error statistic computed as $C*N1 + D*N2$, wherein N1 is the first error statistic, N2 is the second error statistic, C is a second coefficient for the first error statistic and is zero, and D is a second coefficient for the second error statistic and is nonzero. In at least some example embodiments, the first set of bits and the second set of bits are overlapping. In at least some example embodiments, the first error statistic comprises a number of errors and the second error statistic comprises a number of consecutive bit error pairs. In at least some example embodiments, the delimiter has a length of N, wherein the received bit stream includes a set of N bits, wherein the first error statistic is computed by counting a number of bit errors over N-1 bits of the set of N bits, wherein the second error statistic is computed by counting a number of consecutive bit error pairs over the set of N bits. In at least some example embodiments, the respective coefficients for the first error statistic and the second error statistic are computed based on parameters of a model configured for modeling error behavior. In at least some example embodiments, the model configured for modeling error behavior comprises a Gilbert-Elliot (GE) model. In at least some example embodiments, the one or more error metrics comprises an error metric computed based on $A*N1 + B*N2$, wherein N1 is the first error statistic, N2 is the second error statistic, A is the respective coefficient for the first error statistic, and B is the respective coefficient for the second error statistic. In at least some example embodiments, the one or more error metrics comprises an error metric computed based on a function of at least one of the one or more linear combinations of the first error statistic and the second error statistic. In at least some example embodiments, the function is computed as $f = [A*N1 + B*N2]^2$, wherein N1 is the first error statistic, N2 is the second error statistic, A is the respective coefficient for the first error statistic, and B is the respective coefficient for the second error statistic. In at least some example embodiments, the function is computed as $f = [A*N1 + B*N2] + C$, wherein N1 is the first error statistic, N2 is the second error statistic, A is the respective coefficient for the first error statistic, and B is the respective coefficient for the second error statistic, and C is a constant.

In at least some example embodiments, an apparatus includes means for selecting, from a received bit stream, a first set of bits and a second set of bits, means for computing a first error statistic on the first set of bits and a second error statistic on the second set of bits, means for computing one or more error metrics based on one or more linear combinations of the first error statistic and the second error statistic, wherein, for at least one of the one or more linear combinations of the first error statistic and the second error statistic, respective coefficients for the first error statistic and the second error statistic are different, and means for determining, based on one or more comparisons based on the one or more error metrics and one or more error thresholds, whether the received bit stream includes a delimiter. In at least some example embodiments, at least one of the one or more linear combinations of the first error statistic and the second error statistic is computed as $A*N1 + B*N2$, wherein N1 is the first error statistic, N2 is the second error statistic, A is the respective coefficient for the first error statistic, and B is the respective coefficient for the second error statistic. In at least some example embodiments, the first set of bits and the second set of bits are non-overlapping. In at least some example embodiments, the first set of bits and the second set of bits are selected based on de-interleaving of the received bit stream. In at least some example embodiments, the first error statistic comprises a count of a number of errors in the first set of bits and the second error statistic comprises a count of a number of errors in the second set of bits. In at least some example embodiments, the one or more error metrics comprises a first error metric equal to the count of the number of errors in the first set of bits and a second error metric equal to the count of the number of errors in the second set of bits. In at least some example embodiments, the one or more error thresholds comprises a first error threshold and a second error threshold, wherein the one or more comparisons comprises a first comparison of the first error metric with the first error threshold and a second comparison of the second error metric with the second error threshold. In at least some example embodiments, the one or more error metrics comprises a first error metric computed based on a first linear combination of the first error statistic and the second error statistic which is computed as A*N1 + B*N2, wherein N1 is the first error statistic, N2 is the second error statistic, A is a first coefficient for the first error statistic and is nonzero, and B is a first coefficient for the second error statistic and is zero, and a second error metric computed based on a second linear combination of the first error statistic and the second error statistic computed as C*N1 + D*N2, wherein N1 is the first error statistic, N2 is the second error statistic, C is a second coefficient for the first error statistic and is zero, and D is a second coefficient for the second error statistic and is nonzero. In at least some example embodiments, the first set of bits and the second set of bits are overlapping. In at least some example embodiments, the first error statistic comprises a number of errors and the second error statistic comprises a number of consecutive bit error pairs. In at least some example embodiments, the delimiter has a length of N, wherein the received bit stream includes a set of N bits, wherein the first error statistic is computed by counting a number of bit errors over N-1 bits of the set of N bits, wherein the second error statistic is computed by counting a number of consecutive bit error pairs over the set of N bits. In at least some example embodiments, the respective coefficients for the first error statistic and the second error statistic are computed based on parameters of a model configured for modeling error behavior. In at least some example embodiments, the model configured for modeling error behavior comprises a Gilbert-Elliot (GE) model. In at least some example embodiments, the one or more error metrics comprises an error metric computed based on A*N1 + B*N2, wherein N1 is the first error statistic, N2 is the second error statistic, A is the respective coefficient for the first error statistic, and B is the respective coefficient for the second error statistic. In at least some example embodiments, the one or more error metrics comprises an error metric computed based on a function of at least one of the one or more linear combinations of the first error statistic and the second error statistic. In at least some example embodiments, the function is computed as $f = [A*N1 + B*N2]^2$, wherein N1 is the first error statistic, N2 is the second error statistic, A is the respective coefficient for the first error statistic, and B is the respective coefficient for the second error statistic. In at least some example embodiments, the function is computed as $f = [A*N1 + B*N2] + C$, wherein N1 is the first error statistic, N2 is the second error statistic, A is the respective coefficient for the first error statistic, and B is the respective coefficient for the second error statistic, and C is a constant.

BRIEF DESCRIPTION OF THE DRAWINGS

The teachings herein can be readily understood by considering the following detailed description in conjunction with the accompanying drawings, in which:

FIG. 1 depicts an example embodiment of a passive optical network (PON) including an optical line terminal (OLT) and a set of optical network units (ONUs) configured to support burst mode communications based on use of a burst delineation scheme for burst detection;

FIG. 2 depicts an example of an upstream burst structure for upstream burst mode communications from an ONU to an OLT;

FIG. 3 depicts an example of anomalous events associated with detection of delimiters in upstream burst mode communications from an ONU to an OLT;

FIG. 4 depicts an example of an upstream burst structure for upstream burst mode communications from an ONU to an OLT where the upstream physical synchronization block (PSBu) has been enhanced to support use of multiple PSBu segments;

FIG. 5 depicts an example of a baseline burst detection scheme using the 64 bits of a 64-bit delimiter;

FIG. 6 depicts examples of Hamming distance of a delimiter shifted to preceding bit sequences for certain preamble and delimiter combinations;

FIG. 7 depicts an example of a Gilbert-Elliot (GE) model configured for modeling correlated or consecutive error behavior;

FIG. 8 depicts an example embodiment of a burst delineation scheme that includes de-interleaving of a received bit stream to form multiple de-interleaved bit streams and performing error analysis on the multiple de-interleaved bit streams for burst detection;

FIG. 9 depicts an example embodiment of a burst delineation scheme for burst detection;

FIG. 10 depicts an example embodiment of a method for use by a receiver for supporting burst mode communications based on burst detection; and

FIG. 11 depicts an example embodiment of a computer suitable for use in performing various functions presented herein.

To facilitate understanding, identical reference numerals have been used herein, wherever possible, in order to designate identical elements that are common among the various figures.

## DETAILED DESCRIPTION

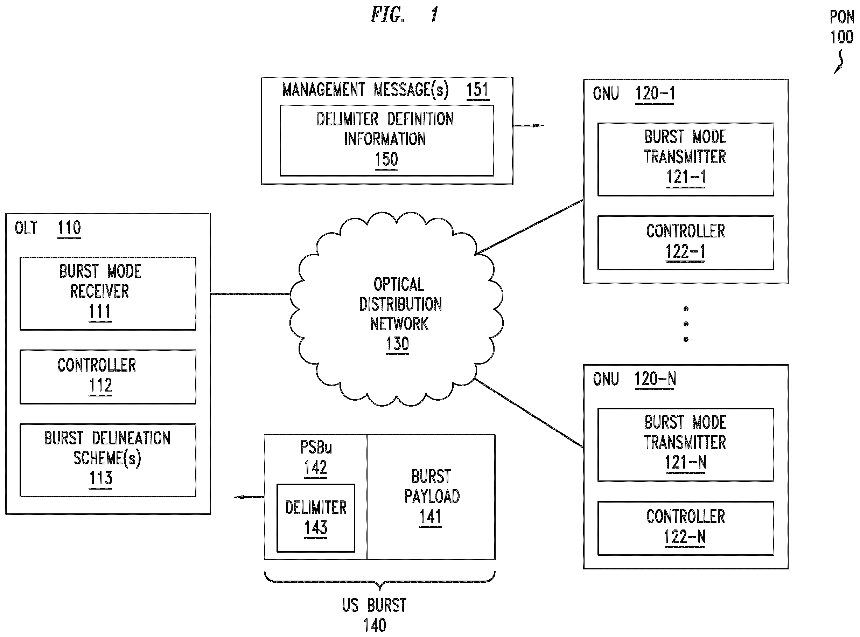

Various example embodiments for supporting burst mode communications in an optical communication system may be configured to support burst mode communications based on use of a burst delineation scheme for burst detection. The burst delineation scheme for burst detection may be configured to support start-of-burst detection in the presence of correlated errors. The burst delineation scheme for burst detection may be based on detection of a delimiter in a burst mode transmission based on selecting, from a received bit stream, a first set of bits and a second set of bits, computing a first error statistic on the first set of bits and a second error statistic on the second set of bits, computing one or more error metrics based on one or more linear combinations of the first error statistic and the second error statistic, wherein, for at least one of the one or more linear combinations of the first error statistic and the second error statistic, respective coefficients for the first error statistic and the second error statistic are different, and determining, based on one or more comparisons based on the one or more error metrics and one or more error thresholds, whether the received bit stream includes a delimiter. The burst delineation scheme for burst detection may be used for burst detection within various types of optical communication networks, including passive optical networks (PONs). The burst delineation scheme for burst detection may be used for upstream burst detection in a PON and/or downstream burst detection in a PON. It will be appreciated that these and various other example embodiments of supporting burst mode communications based on use of a burst delineation scheme for burst detection may be further understood by way of reference to FIG. 1, which illustrates an example embodiment of a passive optical network configured to support burst mode communications.

FIG. 1 depicts an example embodiment of a passive optical network (PON) including an optical line terminal (OLT) and a set of optical network units (ONUs) configured to support burst mode communications based on use of a burst delineation scheme for burst detection.

The PON 100 may be configured to provide network access to a set of customers, based on optical communications, in various contexts and based on various technologies. For example, the PON 100 may operate as a point-to-multipoint (P2MP) data distribution system configured to provide broadband network access for customers (e.g., a telecommunications network that supports communications for customers, including delivering communications to the customers and supporting communications from the customers). For example, the PON 100 may operate using various types of PON technologies and various PON standards (e.g., the G.9804 standard for 50G PON). It will be appreciated that the PON 100 may be used in various other contexts, configured based on various other PON technologies and/or PON standards, or the like, as well as various combinations thereof.

The PON 100 may include various communication elements configured to support optical communications. The PON 100 includes an optical line terminal (OLT) 110 and a set of optical network units (ONUs) 120-1 - 120-N (collectively, ONUs 120) connected via an optical distribution network (ODN) 130. The PON 100 may be configured to support downstream (DS) communications from the OLT 110 to the ONUs 120 via the ODN 130 and upstream (US) communications from the ONUs 120 to the OLT 110 via the ODN 130. The PON 100, as discussed further below, may be configured to support US communications from the ONUs 120 to the OLT 110 based on burst mode communications supported using one or more burst delineation schemes to provide improved burst detection for burst mode communications. It will be appreciated that the PON 100 may include various other elements (which have been omitted for purposes of clarity).

The OLT 110 is configured to support communications between the ONUs 120 and one or more upstream networks (omitted for purposes of clarity). The OLT 110 may be located in a central location, such as a central office (CO) or other suitable location. For example, the one or more upstream networks may include one or more core communication networks configured to support communications of the OLT 110 and, thus, of the ONUs 120. For example, the one or more upstream networks may include the Internet, data center networks, enterprise networks, or the like, as well as various combinations thereof. For example, the OLT 110 may be configured to forward data received from the one or more upstream networks downstream toward the ONUs 120 via the ODN 130 and to forward data received from the ONUs 120 via the ODN 130 upstream toward the one or more upstream networks. The OLT 110, as discussed further below, may be configured to support US communications from the ONUs 120 based on burst mode communications supported using one or more burst delineation schemes to provide improved burst detection for burst mode communications. For example, the OLT 110 includes a burst mode receiver 111 configured to support burst mode communications using one or more burst delineation schemes to provide improved burst detection for burst mode communications and a controller 112 configured to control operation of the burst mode receiver 111 to support burst mode communications using one or more burst delineation schemes to provide improved burst detection for burst mode communications. The burst delineation scheme 113 which may be used by the OLT 110 for detection of US bursts from the ONUs 120 is discussed further below. It will be appreciated that the OLT 110 may include various other elements (e.g., a transmitter or the like) configured to support optical communications within the PON 100.

The ONUs 120 each are configured to support communications between the OLT 110 and one or more downstream networks or devices (omitted for purposes of clarity). The ONUs 120 may be located at respective user premises or other suitable locations. For example, the one or more downstream networks or devices for an ONU 120 may include one or more local area networks (LANs) of the customer, one or more communication devices of the customer (e.g., a modem, a router, a switch, a set top box, a smart television, a gaming system, a computer, a smartphone, or the like, as well as various combinations thereof). For example, an ONU 120 may be configured to forward data received from the OLT 110 via the ODN 130 downstream toward one or more downstream networks or devices and to forward data received from the one or more downstream networks or devices upstream toward the OLT 110 via the ODN 130. The ONUs 120, as discussed further below, may be configured to support US communications to the OLT 110 based on burst mode communications supported using one or more burst delineation schemes to provide improved burst detection for burst mode communications. The ONUs 120-1 - 120-N include burst mode transmitters 121-1 - 121-N (collectively, burst mode transmitters 121) configured to support burst mode communications and controllers 122-1 - 122-N (collectively, controllers 122) configured to control operation of the burst mode transmitters 121 to support burst mode communications, respectively. It will be appreciated that the ONUs 120 may include various other elements (e.g., receivers or the like) configured to support optical communications within the PON 100.

The ODN 130 may be a data distribution system configured to support communications between the OLT 110 and the ONUs 120, including DS communications from the OLT 110 to the ONUs 120 and US communications from the ONUs 120 to the OLT 110. The ODN 130, for purposes of clarity, is simply depicted as an optical fiber or set of optical fibers configured to support propagation of optical signals downstream from the OLT 110 to the ONUs 120 and upstream from the ONUs 120 to the OLT 110; however, it will be appreciated that the ODN 130 may be implemented using various different components which may be arranged in various different configurations. For example, the ODN 130 may include various passive optical components (e.g., optical fibers, optical couplers, optical splitters, and the like) which do not require power to distribute data signals between the OLT 110 and the ONUs 120. For example, the ODN 130 may be implemented using a branching configuration or other suitable P2MP configurations. It will be appreciated that the ODN 130 may include various other elements for supporting communications between the OLT 110 and the ONUs 120.

The PON 100, as indicated above, is configured to support US communications from the ONUs 120 to the OLT 110 using burst mode communications based on use of one or more burst delineation schemes to provide improved burst detection for burst mode communications. More specifically, in order to support an US burst from an ONU 120-x to the OLT 110, the OLT 110 and the ONU 120-x cooperate as follows. The ONU 120-x transmits an US burst 140 to the OLT 110. The US burst 140 includes a burst payload 141 and an upstream physical synchronization block (PSBu) 142. The PSBu 142 includes a delimiter 143 configured to support detection of the US burst 140 and delineation of the burst payload 141 within the US burst 140. The ONU 120-x generates the delimiter 143 based on delimiter definition information 150 which defines the delimiter 143, which is received by the ONU 120-x from the OLT 110. The delimiter definition information 150 which defines the delimiter 143 may be provided from the OLT 110 to the ONU 120-x using one or more management messages 151. The OLT 110 receives the US burst 140 from the ONU 120-x and recovers the burst payload 141 from the US burst 140 based on detection of the delimiter 143 using the burst delineation scheme(s) 113. The burst delineation scheme(s) 113 may be based on computing a set of error statistics based on a received bit stream, computing a set of error metrics based on the set of error statistics, and identifying the delimiter 143 based on a set of comparisons performed using the set of error metrics and a set of error thresholds. In this manner, the detection of US bursts from the ONUs 120 to the OLTs 110 is improved.

It will be appreciated that various example embodiments for supporting burst delineation based on burst delineation schemes configured to provide improved burst detection for burst mode communications within the PON 100 may be further understood by first considering various aspects of optical communications, including PONs, more generally.

PONs, as indicated above, provide broadband access using a P2MP topology in which one OLT at the network side is used to connect to a multitude (e.g., up to 64) of ONUs at the user side by means of an ODN or fiber plant that contains optical fibers and splitters without active components. Most PON technologies, such as G-PON, E-PON, and XGS-PON, are time-division multiplexing (TDM) PON technologies, in which the fiber medium is shared in time between the different ONUs. In the DS direction (i.e., OLT to ONUs), the signal is broadcast from the OLT to all ONUs. In the US direction (i.e., ONUs to OLT), a time-division multiple-access (TDMA) scheme, also known as burst-mode

(BM) operation, is employed in which the ONUs send burst signals that do not overlap in time. Also, time-and-wavelength-division multiplexing (TWDM) PON technologies exist, such as NG-PON2, in which multiple TDM systems at different wavelengths are stacked to provide a wavelength dimension. Additionally, various standards have been defined for PON communications. For example, the ITU-T standardization body published the G.9804.3 standard for 50G PON (which combines a 50G line rate in DS with 12.5G and 25G in US), and then later published Amendment 1 of the G.9804.3 standard (which also includes a 50G US line rate). The G.9804.3 physical media dependent specification goes hand-in-hand with the G.9804.2 common transmission convergence layer specification, which specifies aspects related to framing of the data transmission.

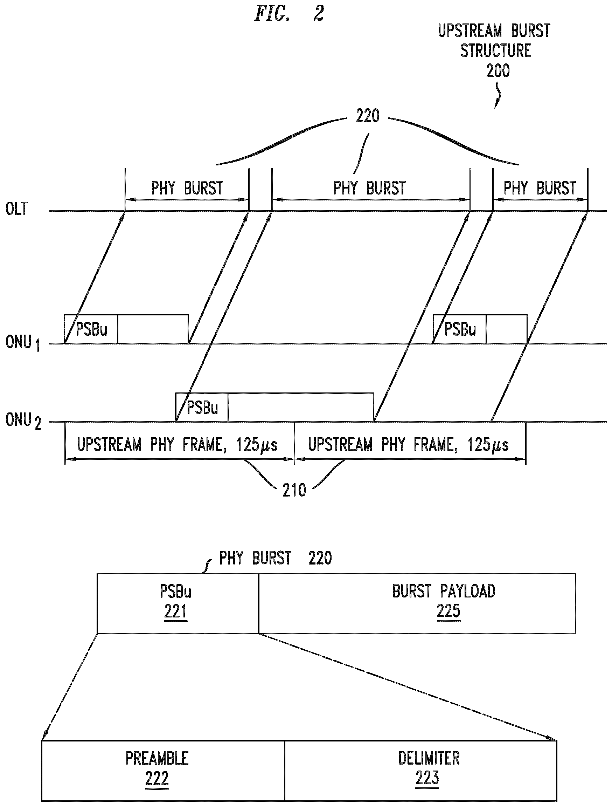

In a PON, in the US direction, BM communication is employed by the ONUs to transmit to the OLT using US bursts. The US burst transmitted from an ONU to the OLT typically includes an upstream physical synchronization block (PSBu) followed by the burst payload. In PON standards, such as XGS PON (G.9807.1), the PSBu consists of a preamble section followed by a delimiter (typically of length up to 64 bits). This is illustrated in FIG. 2, which depicts an example of an US burst structure for US burst mode communications from ONUs to an OLT. As illustrated in FIG. 2, an upstream burst structure 200 for XGS-PON includes TDM-based multiplexing of the upstream channel into 125 μs US physical frames 210 (two of which are illustrated, for purposes of clarity). As further illustrated in FIG. 2 and mentioned above, the ONUs transmit to the OLT using US physical bursts 220 (denoted as PHY bursts 220), where each US PHY burst 220 is composed of a PSBu 221 followed by an associated burst payload 225. In the example of FIG. 2, a first ONU (denoted as $ONU_1$) sends an US PHY burst 220 to the OLT, then a second ONU (denoted as $ONU_2$) sends an US PHY burst 220 to the OLT, and then the first ONU sends another US PHY burst 220 to the OLT. As further illustrated in FIG. 2 and also mentioned above, each PSBu 221 of an US PHY burst 220 is composed of a preamble 222 and a delimiter 223. The PSBu 221 of an US PHY burst 220 from an ONU to the OLT is configured to enable the OLT to detect the US PHY burst 220 from the ONU and recover the burst payload 225 of the US PHY burst 220.

In a PON, as indicated above, BM communication is employed by the ONUs to transmit to the OLT using US bursts. For normal US operation, the OLT sends control information in the DS direction to the ONUs for instructing the ONUs regarding various parameters for the US bursts sent by the ONUs to the OLT. For example, the OLT provides the ONUs with a bandwidth map (BWmap) which includes information on the 'starttime' and the 'grantsize' of the US bursts for the different ONUs. Nevertheless, the exact time instance of arrival of the US burst to the OLT is not known to the OLT due to, for instance, clock wander and alignment uncertainty. As such, the successful detection and framing of an US burst at the OLT receiver is typically based on accurately identifying and delineating the delimiter in the PSBu of the US burst. The delimiter is typically a specially-designed pattern with features such as DC balance, large Hamming distance from all shifted patterns of itself, and large Hamming distance from all shifted patterns of the preceding preamble. A typical delimiter detection scheme involves examining bits in the incoming bit stream to match the delimiter while tolerating a certain number of bit errors (E). At the OLT, the delimiter search is deemed to be successful at the first occurrence of an acceptable match within the search window; however, two possible anomalous events may occur within the search window at the OLT: namely, a missing burst or a severely errored burst. These anomalous events are discussed further below.

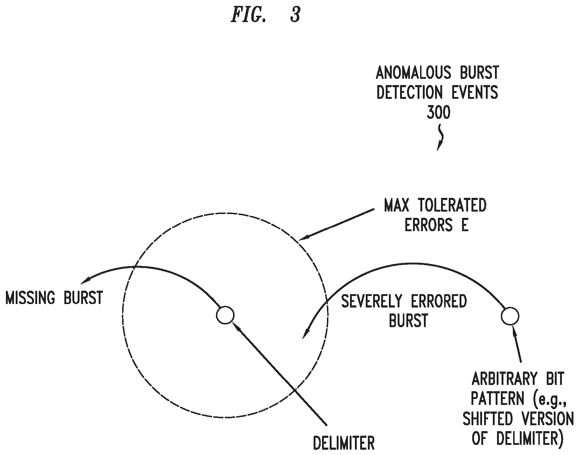

In US communication from an ONU to the OLT, BM communication based on US bursts may fail due to an unsuccessful search for the delimiter of the US burst which, as indicated above, may be due to a missing burst or a severely errored burst. A missing burst is deemed to have occurred when the ONU transmitted a burst, but the delimiter is not detected at the OLT within the search window due to more than the tolerable number of errors introduced by the channel. This is undesirable since it represents lost information. The associated probability is called the probability of missing burst (PMB). On the other hand, a severely errored burst is deemed to have occurred when a delimiter is detected at a location different from a true delimiter (e.g., shifted version of delimiter) due to errors introduced by the channel causing the received pattern to fall within the tolerable number of errors of the delimiter. This is undesirable since an inaccurate burst delineation and payload is sent to the upper layers of the OLT processing. The associated probability is called the probability of severely errored burst (PSEB). These anomalous events are illustrated in FIG. 3 as anomalous burst detection events 300. It will be appreciated that robust and efficient US BM communication relies on minimizing both PMB and PSEB for the worst-case US channel.

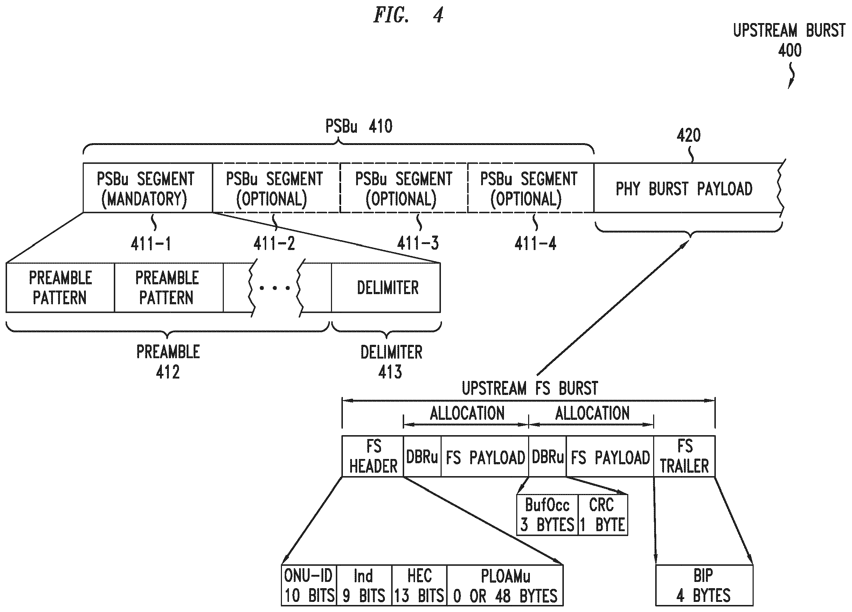

In the more recent 50G PON standard and associated common transmission conversion layer specification, for an US burst including a PSBu and a burst payload, the PSBu structure has been enhanced to include from one to four PSBu segments. This structure is depicted in FIG. 4. As illustrated in FIG. 4, an upstream burst 400 includes a PSBu 410 and a PHY burst payload 420. The PSBu 410 is composed of at least one PSBu segment 411 and possibly up to four PSBu segments 411 (which are illustrated as PSBu segments 411-1 to 411-4). As illustrated, each PSBu segment 411 includes a preamble 412 of the PSBu segment 411 and a delimiter 413 of the PSBu segment 411. The preamble 412 may be composed of repetitions of a preamble pattern. The delimiter 413 is configured to support identification and delineation of the upstream burst 400. The PHY burst payload 420 includes one or more allocations (for purposes of clarity, two allocations are depicted) arranged between a pair of framing-sublayer (FS) elements, starting with an FS header and terminated by an FS trailer. As depicted in FIG. 4, the FS header includes a 10-bit ONU-ID field, a 9-bit Indication (Ind) field, a 13-bit hybrid error correction (HEC) field, and, optionally, a PLOAMu field (0 bytes when not included, 48 bytes when included). As depicted in FIG. 4, each allocation may include an US Dynamic Bandwidth Report (DBRu) header and an FS payload, where the DBRu header includes a 3-byte Buffer Occupancy (BufOcc) field and a 1-byte cyclic redundancy check (CRC) field. As depicted in FIG. 4, the FS trailer includes a 4-byte bit interleaved parity (BIP) field.

In the more recent 50G PON standard and the associated common transmission conversion layer specification, the ability to include up to four PSBu segments in the PSBu was primarily motivated by the fact that the higher speed US transmission rates are expected to require receiver side DSP equalizer training in addition to the typical burst mode receiver subsystem operations such as amplitude recovery (AR) and clock recovery (CR). These various receiver subsystem operations may have inherently different requirements on the training sequences to achieve rapid convergence. Consequently, enabling transmission of distinct preamble/delimiter patterns enables efficient realization of the different subsystem operations (such as AR, CR, and equalizer training). In addition to allowing for long pseudo-random binary sequences (PRBS) with padded zeroes in the preamble, the standard also supports programmable custom patterns of up to 64 bits for the preamble pattern and the delimiter. Nevertheless, the burst detection scheme considered in the standard still relies on the previously presented baseline strategy of matching the final delimiter while tolerating a certain number of bit errors, which may be insufficient in various situations (e.g., where higher speed US transmission rates are employed). Future standards may also support longer or different custom preamble patterns and delimiters, such as 128-bit delimiters.

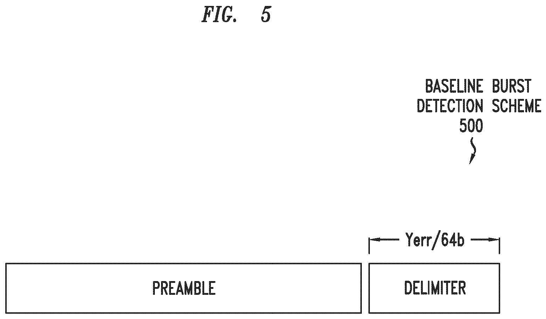

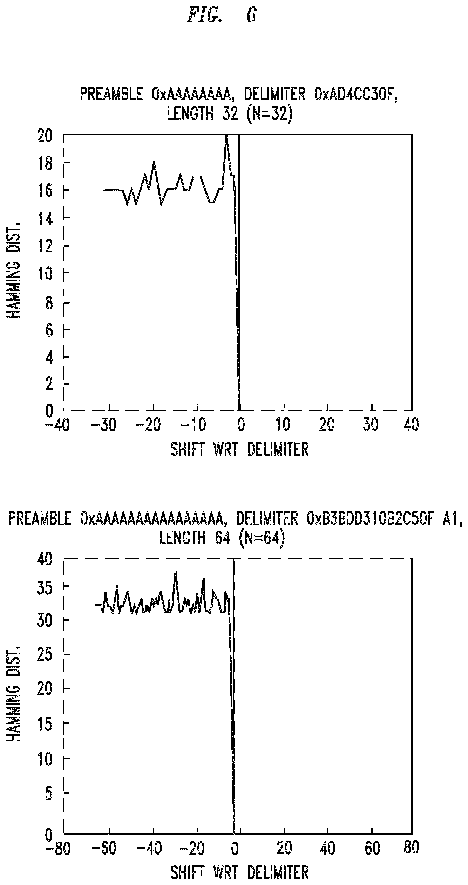

Consider the baseline burst detection scheme that is based on identifying, in the received bit stream, the first occurrence of an N-bit delimiter with up to Y bit errors. The baseline burst detection scheme for a 64-bit delimiter is depicted in FIG. 5 as baseline burst detection scheme 500. The maximum value for the number of tolerable errors, $E_{max}$, depends on the minimum Hamming distance of the N-bit delimiter with respect to preceding N-bit blocks containing portions of the preamble and shifted versions of the delimiter. For well-chosen preamble and delimiter combinations, this Hamming distance can be as high as $D_{max} = floor(N/2) - 1$, which yields a maximum number of tolerated errors of $E_{max} = floor(N/4) - 1$. The Hamming distance to shifted preceding versions is illustrated in FIG. 6 for certain preamble and delimiter combinations specified in the G.9804 standard (illustratively, for N=32 at the top of FIG. 6 and for N=64 at the bottom of FIG. 6). The value of $E_{max}$ is then typically used to estimate the highest PSEB for a channel with a specific BER assuming a binary symmetric channel (BSC) model. For example, when $E_{max} = floore(N/4) - 1$ errors are tolerated,

$$PSEB = \binom{N}{E_{max} + 1} BER^{E_{max}+1}$$

(see Appendix III of G.9804.3). In at least some embodiments, the burst detection may be enhanced by not only searching for the delimiter pattern, but also searching for the preceding preamble pattern.

Along similar lines, assuming values of Y in the baseline burst detection scheme (these are typically chosen such that $Y \le E_{max}$), the PMB may be estimated for a given channel model such as BSC. The BSC model allows for an analytical estimation of PSEB and PMB based on the binomial distribution. This model implies uncorrelated errors and is typically a good approximation for 10 Gb/s rates and lower rates. However, at higher US rates, the BSC model generally is no longer valid due to the presence of correlation among errors arising, for instance, from the use of channel equalization schemes. As discussed further below, the Gilbert-Elliot (GE) model, with parameter b, is more suited for modeling correlated or consecutive error behavior.

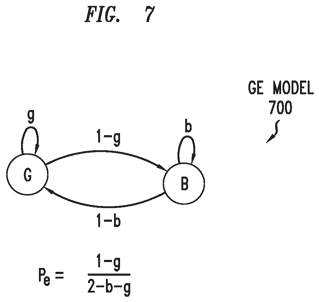

The GE model, as indicated above, may be used for modeling correlated or consecutive error behavior, especially when a DFE is employed. The GE model is a Markov model with two states, a good (error-free) state G, and a bad (error) state B. The parameter b represents the probability of having a bit-error when in the bad state (i.e., when the previous bit was in error). The GE model is depicted in FIG. 7 as GE model 700. The BER (Pe) is related to the parameters g and b as shown in FIG. 7. For binary non-return to zero (NRZ) transmission with a single-tap DFE equalizer, the highest amount of correlation corresponds to a value of b = 0.5. Hence, GE b= 0.5 is often used as a representative of the worst-case model with correlated errors. It is noted that more complicated Markov models, such as Fritchman Markov models or other models, may be used to characterize correlated errors, especially with colored noise and multiple DFE taps; however, for purposes of clarity, the discussion here is related to the GE model.

PON standards typically require reliable operation at a target BER, such as 1e-2 in the G.9804.3 standard. For a given BER and a specific delimiter detection scheme, the presence of correlated errors leads to a significantly higher value of PSEB and PMB as compared to that estimated using the BSC assumption.

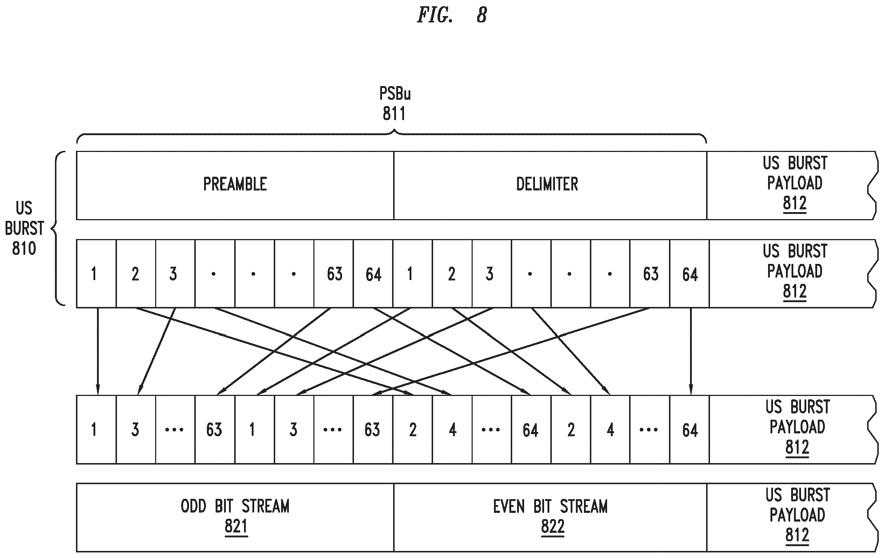

Burst detection in the presence of correlated errors may be improved based on use of one or more burst delineation schemes according to various embodiments. The burst delineation schemes may be based not only on counting the total number of errors over the entire delimiter, but counting the errors over two or more, possibly overlapping, groups of bits and using the error counts to find the burst. Here, by gathering error statistics over multiple groups of bits, correlated errors may be taken into account within the context of delimiter detection (e.g., either mitigating the impact of the correlated errors on the error counts or explicitly obtaining statistics on the correlated errors with the error counts). This approach of counting the errors over two or more, possibly overlapping, groups of bits enables a collection of receiver-only techniques for delimiter detection that improve burst detection performance in the presence of correlated errors. An example embodiment of one such approach is presented with respect to FIG. 8.

FIG. 8 depicts an example embodiment of a burst delineation scheme that includes de-interleaving of a received bit stream to form multiple de-interleaved bit streams and performing error analysis on the multiple de-interleaved bit streams for burst detection. As depicted in FIG. 8, the burst delineation scheme 800 involves de-interleaving of a received bit stream by a factor of L, where L = 2 for an L * 64-bit = 128 bit word to realize odd and even bit streams. More specifically, a received bit stream of an US burst 810 includes a PSBu 811 and an US burst payload 812. The PSBu 811 includes a delimiter of length 64 bits. The 64-bit delimiter needs to be detected in order to detect the US burst 810 and delineate the US burst payload 812 from the US burst header 811. In addition, the last 64 bits of the preamble can also be used to enhance the detection. The US burst 810 is detected based on de-interleaving of the received bit stream into two de-interleaved bit streams and performing error checking on the two de-interleaved bit streams using two error thresholds for the two de-interleaving bit streams, respectively. In FIG. 8, the 128-bit word consisting of the last 64 bits of the preamble and the 64 bits of the delimiter is de-interleaved such that the odd bits of the 128-bit word are used to form an odd bit stream 821 and the even bits of the 128-bit words are used to form an even bit stream 822. The delimiter is then detected based on error checking performed on the odd bit stream 821 and error checking performed on the even bit stream 822. Here, a burst is deemed to be detected when the number of errors in the odd bit stream 821 is $\leq$ Y and the number of errors in the even bit stream 822 is $\leq$ X. The values of X and Y as the error thresholds for the two de-interleaved bit streams may be equal or may be different. The use of de-interleaving here breaks the error correlation and makes the probability of the number of bit errors per word approach that of the BSC (i.e., the binomial distribution). It will be appreciated that, although primarily presented with respect to a specific de-interleaving (namely, L =2 for de-interleaving into two de-interleaved bit streams where the de-interleaving is based on grouping of odd bits and even bits of the original bit stream, respectively), other suitable types of de-interleaving may be employed to break the error correlation in a manner for supporting burst detection. It will be appreciated that, although presented with respect to application of de-interleaving to a bit word that is a combination of bits of the preamble and delimiter, the de-interleaving could also be done based on a bit word that consists only of a delimiter, such as a 64-bit delimiter or a longer delimiter (e.g., a 128-bit delimiter or delimiters of other suitable lengths).

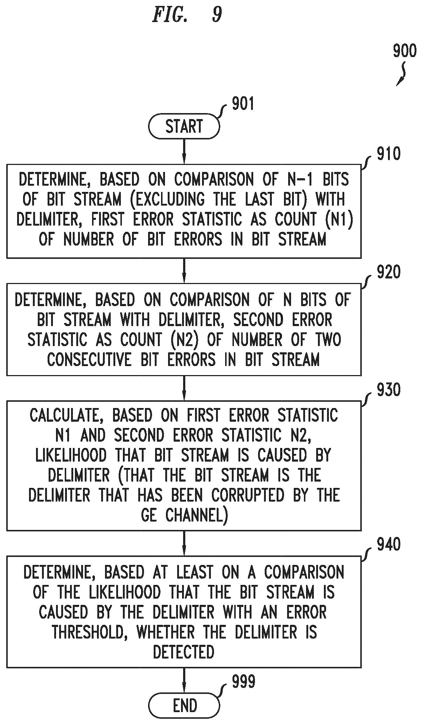

FIG. 9 depicts an example embodiment of a burst delineation scheme for burst detection. The burst delineation scheme is based on a method 900 for detection of a delimiter in a bit stream that is based on use of a GE model. It will be appreciated that, although primarily presented as being performed serially, at least a portion of the functions of the method 900 may be performed contemporaneously or in a different order than as presented with respect to FIG. 9. At block 901, the method 900 begins. At block 910, a first error statistic, which is a count (N1) of the number of bit errors in the bit stream, is determined by comparing the bit stream with the delimiter, but while excluding the last bit (i.e., for N-1 bits). At block 920, a second error statistic, which is a count (N2) of the number of two consecutive bit errors over all bits (i.e., the number of times that there are two consecutive bits in error), is determined by comparing the bit stream with the delimiter. At block 930, the likelihood that the bit stream is caused by the delimiter, i.e., that the bit stream is the delimiter that has been corrupted by the GE channel, is calculated based on the first error statistic (N1) and second error statistic (N2). Based on a GE channel model, consisting of an estimation of the parameters g and b of the GE model, a log likelihood of the bit stream being caused by the delimiter, may be calculated as (A) N1 + (B)N2, where A is related to the log likelihood of having a bit error and B is related to the log likelihood of having two consecutive bit errors. The coefficients A and B in the log likelihood (A)N1 + (B)N2 may be calculated from the estimations of the GE model parameters g and b. The estimated parameters g and b of the GE model may be determined in various ways. For example, estimated parameters g and b of the GE model may be known, may be estimated in advance (e.g., based on one or more earlier sections of one or more other bit streams), may be estimated based on the current bit stream section, or the like, as well as various combinations thereof. At block 940, a determination is made, based at least on a comparison of the likelihood that the bit stream is caused by the delimiter with an error threshold (e.g., a comparison of the log likelihood (A)N1 + (B)N2 with an error threshold E), whether the delimiter is detected. At block 999, the method 900 ends. It will be appreciated that, although primarily presented with respect to the use of two error statistics, more than two error statistics may be used for detection of the delimiter for supporting burst detection. For example, the scheme can be extended to N3 and so on for refining the log likelihood calculations or for more complex Markov models.

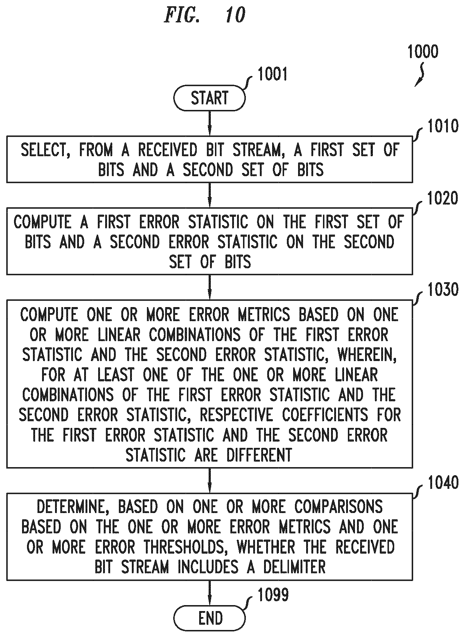

FIG. 10 depicts an example embodiment of a method for use by a receiver for supporting burst mode communications based on burst detection. It will be appreciated that, although primarily presented as being performed serially, at least a portion of the functions of the method 1000 may be performed contemporaneously or in a different order than as presented with respect to FIG. 10.

At block 1001, the method 1000 begins.

At block 1010, select, from a received bit stream, a first set of bits and a second set of bits. The first and second sets of bits may be non-overlapping (e.g., based on de-interleaving of the received bit stream) or overlapping.

At block 1020, compute a first error statistic on the first set of bits and a second error statistic on the second set of bits. The first error statistic may be determined based on comparison of the first set of bits with a corresponding set of bits in the delimiter and the second error statistic may be determined based on comparison of the second set of bits with a corresponding set of bits in the delimiter. In at least some example embodiments, the first error statistic may include a count of a number of errors in the first set of bits and the second error statistic may include a count of a number of errors in the second set of bits. In at least some example embodiments, the first error statistic may include a number of errors and the second error statistic may include a number of consecutive bit error pairs. In at least some example embodiments, the delimiter has a length of N, the received bit stream includes a set of N bits, and the first error statistic is computed by counting a number of bit errors over N-1 bits of the set of N bits and the second error statistic is computed by counting a number of consecutive bit error pairs over the set of N bits. It will be appreciated that various other types of error statistics may be computed.

At block 1030, compute one or more error metrics based on one or more linear combinations of the first error statistic and the second error statistic, wherein, for at least one of the one or more linear combinations of the first error statistic and the second error statistic, respective coefficients for the first error statistic and the second error statistic are different.

In at least some example embodiments, at least one of the one or more linear combinations of the first error statistic and the second error statistic is computed as A*N1 + B*N2, wherein N1 is the first error statistic, N2 is the second error statistic, A is the respective coefficient for the first error statistic, and B is the respective coefficient for the second error statistic.

In at least some example embodiments, the one or more linear combinations of the first error statistic and the second error statistic includes (1) a first linear combination of the first error statistic and the second error statistic which is computed as A*N1 + B*N2, wherein N1 is the first error statistic, N2 is the second error statistic, A is a first coefficient for the first error statistic and is nonzero, and B is a first coefficient for the second error statistic and is zero and (2) a second linear combination of the first error statistic and the second error statistic computed as C*N1 + D*N2, wherein N1 is the first error statistic, N2 is the second error statistic, C is a second coefficient for the first error statistic and is zero, and D is a second coefficient for the second error statistic and is nonzero. In at least some example embodiments, the one or more error metrics includes (1) a first error metric computed based on a first linear combination of the first error statistic and the second error statistic which is computed as A*N1 + B*N2, wherein N1 is the first error statistic, N2 is the second error statistic, A is a first coefficient for the first error statistic and is nonzero, and B is a first coefficient for the second error statistic and is zero and (2) a second error metric computed based on a second linear combination of the first error statistic and the second error statistic computed as C*N1 + D*N2, wherein N1 is the first error statistic, N2 is the second error statistic, C is a second coefficient for the first error statistic and is zero, and D is a second coefficient for the second error statistic and is nonzero.

In at least some example embodiments, the one or more linear combinations of the first error statistic and the second error statistic is computed as A*N1 + B*N2, wherein N1 is the first error statistic, N2 is the second error statistic, A is the respective coefficient for the first error statistic, and B is the respective coefficient for the second error statistic. In at least some example embodiments, the one or more error metrics comprises an error metric computed based on A*N1 + B*N2, wherein N1 is the first error statistic, N2 is the second error statistic, A is the respective coefficient for the first error statistic, and B is the respective coefficient for the second error statistic. In at least some example embodiments, the one or more error metrics includes an error metric computed based on a function of at least one of the one or more linear combinations of the first error statistic and the second error statistic. In at least some example embodiments, the function is computed as $f = [A*N1 + B*N2]^2$, wherein N1 is the first error statistic, N2 is the second error statistic, A is the respective coefficient for the first error statistic, and B is the respective coefficient for the second error statistic. In at least some example embodiments, the function is computed as $f = [A*N1 + B*N2] + C$, wherein N1 is the first error statistic, N2 is the second error statistic, A is the respective coefficient for the first error statistic, and B is the respective coefficient for the second error. It will be appreciated that various other functions of the linear combination of the first error statistic and the second error statistic may be used for computing one or more error metrics.

At block 1040, determine, based on one or more comparisons based on the one or more error metrics and one or more error thresholds, whether the received bit stream includes a delimiter. In at least some example embodiments, the one or more error thresholds includes a first error threshold and a second error threshold, and the one or more comparisons includes a first comparison of the first error metric with the first error threshold and a second comparison of the second error metric with the second error threshold. In at least some example embodiments, the one or more error thresholds includes an error threshold for comparison with an error metric computed as a function of a linear combinations of the first error statistic and the second error statistic. It will be appreciated that various other comparisons, based on various other types or numbers of error thresholds, may be utilized for determining whether the received bit stream includes a delimiter.

It will be appreciated that various other capabilities may be incorporated within the context of the method 1000 of FIG. 10.

In at least some example embodiments, the first set of bits and the second set of bits are non-overlapping. In at least some example embodiments, the first set of bits and the second set of bits are selected based on de-interleaving of the received bit stream. In at least some example embodiments, the first error statistic comprises a count of a number of errors in the first set of bits and the second error statistic comprises a count of a number of errors in the second set of bits. In at least some example embodiments, the one or more error metrics comprises a first error metric equal to the count of the number of errors in the first set of bits and a second error metric equal to the count of the number of errors in the second set of bits. In at least some example embodiments, the one or more error thresholds comprises a first error threshold and a second error threshold, wherein the one or more comparisons comprises a first comparison of the first error metric with the first error threshold and a second comparison of the second error metric with the second error threshold. In at least some example embodiments, the first error threshold and the second error threshold are equal. In at least some example embodiments, the one or more error metrics comprises (1) a first error metric computed based on a first linear combination of the first error statistic and the second error statistic which is computed as $A*N1 + B*N2$, wherein N1 is the first error statistic, N2 is the second error statistic, A is a first coefficient for the first error statistic and is nonzero, and B is a first coefficient for the second error statistic and is zero and (2) a second error metric computed based on a second linear combination of the first error statistic and the second error statistic computed as $C*N1 + D*N2$, wherein N1 is the first error statistic, N2 is the second error statistic, C is a second coefficient for the first error statistic and is zero, and D is a second coefficient for the second error statistic and is nonzero. It will be appreciated that various other error metrics or sets of error metrics, based on one or more linear combinations of the first error statistic and the second error statistic, may be utilized. It will be appreciated that various other types of comparisons may be utilized for determining whether the received bit stream includes the delimiter. It will be appreciated that these and various other example embodiments related to use of non-overlapping sets of bits may be used together in various combinations.

In at least some example embodiments, the first set of bits and the second set of bits are overlapping. In at least some example embodiments, the first error statistic comprises a number of errors and the second error statistic comprises a number of consecutive bit error pairs. In at least some example embodiments, wherein the delimiter has a length of N, wherein the received bit stream includes a set of N bits, wherein the first error statistic is computed by counting a number of bit errors over N-1 bits of the set of N bits, wherein the second error statistic is computed by counting a number of consecutive bit error pairs over the set of N bits. In at least some example embodiments, the respective coefficients for the first error statistic and the second error statistic are computed based on parameters of a model configured for modeling error behavior. In at least some example embodiments, the model configured for modeling error behavior comprises a GE model. In at least some example embodiments, the one or more error metrics comprises an error metric computed based on $A*N1 + B*N2$, wherein N1 is the first error statistic, N2 is the second error statistic, A is the respective coefficient for the first error statistic, and B is the respective coefficient for the second error statistic. In at least some example embodiments, the one or more error metrics comprises an error metric computed based on a function of at least one of the one or more linear combinations of the first error statistic and the second error statistic. In at least some example embodiments, the function is computed as $f = [A*N1 + B*N2]^2$, wherein N1 is the first error statistic, N2 is the second error statistic, A is the respective coefficient for the first error statistic, and B is the respective coefficient for the second error statistic. In at least some example embodiments, the function is computed as $f = [A*N1 + B*N2] + C$, wherein N1 is the first error statistic, N2 is the second error statistic, A is the respective coefficient for the first error statistic, and B is the respective coefficient for the second error statistic, and C is a constant. It will be appreciated that various other functions may be utilized. It will be appreciated that various other types of comparisons may be utilized for determining whether the received bit stream includes the delimiter. It will be appreciated that these and various other example embodiments related to use of overlapping sets of bits may be used together in various combinations.

It will be appreciated that various other capabilities may be incorporated within the context of the method 1000 of FIG. 10.

At block 1099, the method 1000 ends.

It will be appreciated that, although primarily presented herein with respect to use of the burst delineation schemes within specific optical communications contexts (namely, for US bursts from ONUs to the OLT in a PON), in at least some example embodiments the burst delineation schemes may be used in other optical communications contexts (e.g., in other PON contexts such as for DS bursts from the OLT to the ONUs, in other optical communications contexts, or the like). It will be appreciated that various example embodiments presented herein for supporting use of burst delineation schemes for detection of US bursts may be adapted for supporting use of burst delineation schemes for detection of DS bursts (e.g., detection of DS bursts may be achieved based a structure similar to the PSBu and use of its associated delimiter to delineate DS bursts). It will be appreciated that, since burst delineation schemes may be used in the upstream direction (i.e., ONU to OLT) for US bursts and may be used in the downstream direction (i.e., OLT to ONU) for DS bursts, upstream-specific terms and downstream-specific terms used herein may be referred to more generally using terms that do not specify a direction of transmission (e.g., the PSBu for US bursts and a similar term that may be defined for the PSB for DS bursts may be referred to more generally as a physical synchronization block (PSB), the PSBu segment for US bursts and the a similar term which may be defined for the PSB segments of DS bursts may be referred to more generally as PSB segments, and so forth).

Various example embodiments for supporting burst mode communications based on use of burst delineation schemes may provide various advantages or potential advantages. For example, various example embodiments for supporting burst mode communications based on use of burst delineation schemes may be configured to provide improved burst mode communications. For example, various example embodiments for supporting burst mode communications based on use of burst delineation schemes may be configured to provide improved burst mode communications by supporting improved burst detection based on improved delineation of burst payloads. For example, various example embodiments for supporting burst mode communications based on use of burst delineation schemes may be configured to provide improved burst mode communications in various PON systems employing BM operation, including TDM PON, TWDM PONs, or the like. For example, various example embodiments for supporting burst mode communications based on use of burst delineation schemes may be configured to support minimization of both PMB and PSEB for the worst-case upstream channels in PON systems. It will be appreciated that various example embodiments for supporting burst mode communications based on use of burst delineation schemes may be configured to provide various other advantages or potential advantages.

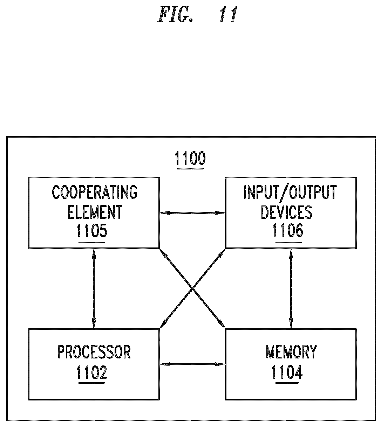

FIG. 11 depicts an example embodiment of a computer suitable for use in performing various functions presented herein.

The computer 1100 includes a processor 1102 and a memory 1104. The processor 1102 may be a processing unit (e.g., a central processing unit (CPU), a graphics processing unit (GPU), or the like) having one or more cores, a core of a processing unit, or the like. The memory 1104 may be a random access memory (RAM), a read-only memory (ROM), or the like. In at least some example embodiments, the computer 1100 may include at least one processor (e.g., processor 1102) and at least one memory (e.g., memory 1104) storing instructions that, when executed by the at least one processor, cause the computer 1100 to perform various functions presented herein.

The computer 1100 also may include a cooperating element 1105. The cooperating element 1105 may be hardware, firmware, software, or various combinations thereof. The cooperating element 1105 may be a process (e.g., a set of instructions) that can be loaded into the memory 1104 and executed by the processor 1102 to implement various functions presented herein (in which case, for example, the cooperating element 1105 (including associated data structures) can be stored on a non-transitory computer readable medium, such as a storage device or other suitable type of persistent storage element (e.g., a magnetic drive, an optical drive, or the like)).
The computer 1100 also may include one or more input/output devices 1106. The input/output devices 1106 may include one or more of a user input device (e.g., a keyboard, a keypad, a mouse, a microphone, a camera, or the like), a user output device (e.g., a display, a speaker, or the like), one or more network communication devices or network communication elements (e.g., an input port, an output port, a receiver, a transmitter, a transceiver, or the like), one or more storage devices (e.g., a tape drive, a floppy drive, a hard disk drive, a solid state drive, or the like), or the like, as well as various combinations thereof.

It will be appreciated that computer 1100 may represent a general architecture and functionality suitable for implementing functional elements described herein, portions of functional elements described herein, or the like, as well as various combinations thereof. For example, the computer 1100 may provide a general architecture and functionality that is suitable for implementing one or more elements presented herein. For example, the computer 1100 may provide a general architecture and functionality that is suitable for implementing at least one of an OLT or a portion thereof, an ONU or a portion thereof, an optical transmitter or a portion thereof, an optical receiver or a portion thereof, an optical transceiver or a portion thereof, an optical communication device or a portion thereof, or the like, as well as various combinations thereof.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. An apparatus for supporting burst mode communications in an optical communication system, wherein the apparatus comprises:

at least one processor; and
at least one memory storing instructions which, when executed by the at least one processor, cause the apparatus at least to:

select, from a received bit stream, a first set of bits and a second set of bits;
compute a first error statistic on the first set of bits and a second error statistic on the second set of bits;
compute one or more error metrics based on one or more linear combinations of the first error statistic and the second error statistic, wherein, for at least one of the one or more linear combinations of the first error statistic and the second error statistic, respective coefficients for the first error statistic and the second error statistic are different; and
determine, based on one or more comparisons based on the one or more error metrics and one or more error thresholds, whether the received bit stream includes a delimiter.

2. The apparatus according to claim 1, wherein at least one of the one or more linear combinations of the first error statistic and the second error statistic is computed as A*N1 + B*N2, wherein N1 is the first error statistic, N2 is the second error statistic, A is the respective coefficient for the first error statistic, and B is the respective coefficient for the second error statistic.

3. The apparatus according to any of claims 1 to 2, wherein the first set of bits and the second set of bits are non-overlapping.

4. The apparatus according to any of claims 1 to 3, wherein the first set of bits and the second set of bits are selected based on de-interleaving of the received bit stream.

5. The apparatus according to any of claims 1 to 4, wherein the first error statistic comprises a count of a number of errors in the first set of bits and the second error statistic comprises a count of a number of errors in the second set of bits.

6. The apparatus according to claim 5, wherein the one or more error metrics comprises:

a first error metric computed based on a first linear combination of the first error statistic and the second error statistic which is computed as A*N1 + B*N2, wherein N1 is the first error statistic, N2 is the second error statistic, A is a first coefficient for the first error statistic and is nonzero, and B is a first coefficient for the second error statistic and is zero; and

a second error metric computed based on a second linear combination of the first error statistic and the second error statistic computed as C*N1 + D*N2, wherein N1 is the first error statistic, N2 is the second error statistic, C is a second coefficient for the first error statistic and is zero, and D is a second coefficient for the second error statistic and is nonzero.

7. The apparatus according to any of claims 1 to 6, wherein the one or more error metrics comprises:

a first error metric computed based on a first linear combination of the first error statistic and the second error statistic which is computed as A*N1 + B*N2, wherein N1 is the first error statistic, N2 is the second error statistic, A is a first coefficient for the first error statistic and is nonzero, and B is a first coefficient for the second error statistic and is zero; and

a second error metric computed based on a second linear combination of the first error statistic and the second error statistic computed as C*N1 + D*N2, wherein N1 is the first error statistic, N2 is the second error statistic, C is a second coefficient for the first error statistic and is zero, and D is a second coefficient for the second error statistic and is nonzero.

8. The apparatus according to any of claims 1 to 2, wherein the first set of bits and the second set of bits are overlapping.

9. The apparatus according to any of claims 1 to 2 or 8, wherein the first error statistic comprises a number of errors and the second error statistic comprises a number of consecutive bit error pairs.

10. The apparatus according to any of claims 1 to 2 or 8 to 9, wherein the delimiter has a length of N, wherein the received bit stream includes a set of N bits, wherein the first error statistic is computed by counting a number of bit errors over N-1 bits of the set of N bits, wherein the second error statistic is computed by counting a number of consecutive bit error pairs over the set of N bits.

11. The apparatus according to any of claims 1 to 2 or 8 to 10, wherein the respective coefficients for the first error statistic and the second error statistic are computed based on parameters of a model configured for modeling error behavior.

12. The apparatus according to any of claims 1 to 11, wherein the one or more error metrics comprises an error metric computed based on A*N1 + B*N2, wherein N1 is the first error statistic, N2 is the second error statistic, A is the respective coefficient for the first error statistic, and B is the respective coefficient for the second error statistic.

13. The apparatus according to any of claims 1 to 12, wherein the one or more error metrics comprises an error metric computed based on a function of at least one of the one or more linear combinations of the first error statistic and the second error statistic.

14. A computer-readable storage medium storing computer program instructions which, when executed by an apparatus, cause the apparatus at least to:

select, from a received bit stream, a first set of bits and a second set of bits;

compute a first error statistic on the first set of bits and a second error statistic on the second set of bits;

compute one or more error metrics based on one or more linear combinations of the first error statistic and the second error statistic, wherein, for at least one of the one or more linear combinations of the first error statistic and the second error statistic, respective coefficients for the first error statistic and the second error statistic are different; and

determine, based on one or more comparisons based on the one or more error metrics and one or more error thresholds, whether the received bit stream includes a delimiter.

15. A method for supporting burst mode communications in an optical communication system, the method comprising the steps of:

selecting, from a received bit stream, a first set of bits and a second set of bits;

computing a first error statistic on the first set of bits and a second error statistic on the second set of bits;

computing one or more error metrics based on one or more linear combinations of the first error statistic and the second error statistic, wherein, for at least one of the one or more linear combinations of the first error statistic and the second error statistic, respective coefficients for the first error statistic and the second error statistic are different; and

determining, based on one or more comparisons based on the one or more error metrics and one or more error thresholds, whether the received bit stream includes a delimiter.

*FIG. 1*

PON
100

MANAGEMENT MESSAGE(s)  151

DELIMITER DEFINITION
INFORMATION
150

ONU  120-1

BURST MODE
TRANSMITTER
121-1

CONTROLLER
122-1

OLT  110

BURST MODE
RECEIVER
111

CONTROLLER
112

BURST DELINEATION
SCHEME(s)
113

OPTICAL
DISTRIBUTION
NETWORK
130

ONU  120-N

BURST MODE
TRANSMITTER
121-N

CONTROLLER
122-N

PSBu
142

DELIMITER
143

BURST
PAYLOAD
141

US BURST
140

EP 4 686 139 A1

## FIG. 2

UPSTREAM BURST
STRUCTURE
200

220

PHY BURST 220

| PSBu 221 | BURST PAYLOAD 225 |
|----------|-------------------|

| PREAMBLE 222 | DELIMITER 223 |
|--------------|---------------|

FIG. 3

ANOMALOUS BURST
DETECTION EVENTS
300

MAX TOLERATED
ERRORS E

MISSING BURST

SEVERELY ERRORED
BURST

ARBITRARY BIT
PATTERN (e.g.,
SHIFTED VERSION
OF DELIMITER)

DELIMITER

FIG. 4

UPSTREAM BURST
400

PSBu 410

| PSBu SEGMENT (MANDATORY) 411-1 | PSBu SEGMENT (OPTIONAL) 411-2 | PSBu SEGMENT (OPTIONAL) 411-3 | PSBu SEGMENT (OPTIONAL) 411-4 | PHY BURST PAYLOAD 420 |

PREAMBLE 412: PREAMBLE PATTERN | PREAMBLE PATTERN ...

DELIMITER 413: DELIMITER

UPSTREAM FS BURST

ALLOCATION | ALLOCATION

FS HEADER | DBRu | FS PAYLOAD | DBRu | FS PAYLOAD | FS TRAILER

FS HEADER: ONU-ID 10 BITS | Ind 9 BITS | HEC 13 BITS | PLOAMu 0 OR 48 BYTES

DBRu: BufOcc 3 BYTES | CRC 1 BYTE

FS TRAILER: BIP 4 BYTES

FIG. 5

BASELINE BURST
DETECTION SCHEME
500

Yerr/64b

| PREAMBLE | DELIMITER |

*FIG. 6*

PREAMBLE 0xAAAAAAAA, DELIMITER 0xAD4CC30F,
LENGTH 32 (N=32)

PREAMBLE 0xAAAAAAAAAAAAAAAA, DELIMITER 0xB3BDD310B2C50F A1,
LENGTH 64 (N=64)

FIG. 7

GE MODEL
700

$$P_e = \frac{1-g}{2-b-g}$$

*FIG. 8*

FIG. 9

900

START — 901

910

DETERMINE, BASED ON COMPARISON OF N−1 BITS OF BIT STREAM (EXCLUDING THE LAST BIT) WITH DELIMITER, FIRST ERROR STATISTIC AS COUNT (N1) OF NUMBER OF BIT ERRORS IN BIT STREAM

920

DETERMINE, BASED ON COMPARISON OF N BITS OF BIT STREAM WITH DELIMITER, SECOND ERROR STATISTIC AS COUNT (N2) OF NUMBER OF TWO CONSECUTIVE BIT ERRORS IN BIT STREAM

930

CALCULATE, BASED ON FIRST ERROR STATISTIC N1 AND SECOND ERROR STATISTIC N2, LIKELIHOOD THAT BIT STREAM IS CAUSED BY DELIMITER (THAT THE BIT STREAM IS THE DELIMITER THAT HAS BEEN CORRUPTED BY THE GE CHANNEL)

940

DETERMINE, BASED AT LEAST ON A COMPARISON OF THE LIKELIHOOD THAT THE BIT STREAM IS CAUSED BY THE DELIMITER WITH AN ERROR THRESHOLD, WHETHER THE DELIMITER IS DETECTED

END — 999

*FIG. 10*

1000

START 1001

SELECT, FROM A RECEIVED BIT STREAM, A FIRST SET OF BITS AND A SECOND SET OF BITS 1010

COMPUTE A FIRST ERROR STATISTIC ON THE FIRST SET OF BITS AND A SECOND ERROR STATISTIC ON THE SECOND SET OF BITS 1020

COMPUTE ONE OR MORE ERROR METRICS BASED ON ONE OR MORE LINEAR COMBINATIONS OF THE FIRST ERROR STATISTIC AND THE SECOND ERROR STATISTIC, WHEREIN, FOR AT LEAST ONE OF THE ONE OR MORE LINEAR COMBINATIONS OF THE FIRST ERROR STATISTIC AND THE SECOND ERROR STATISTIC, RESPECTIVE COEFFICIENTS FOR THE FIRST ERROR STATISTIC AND THE SECOND ERROR STATISTIC ARE DIFFERENT 1030

DETERMINE, BASED ON ONE OR MORE COMPARISONS BASED ON THE ONE OR MORE ERROR METRICS AND ONE OR MORE ERROR THRESHOLDS, WHETHER THE RECEIVED BIT STREAM INCLUDES A DELIMITER 1040

END 1099

FIG. 11

## EUROPEAN SEARCH REPORT

Application Number

EP 25 19 1291

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 885 500 B1 (ERICSSON TELEFON AB L M [SE]) 25 May 2005 (2005-05-25) <br> * paragraph [0001] - paragraph [0012] * <br> * paragraphs [0021], [0024], [0041] * <br> ----- | 1-15 | INV. <br> H04L7/04 <br> H04L1/20 |
| A | US 5 422 916 A (NALL DAVID C [US]) 6 June 1995 (1995-06-06) <br> * the whole document * <br> ----- | 1-15 | |

TECHNICAL FIELDS SEARCHED (IPC)

H04L

The present search report has been drawn up for all claims

| Place of search | Date of completion of the search | Examiner |
|---|---|---|
| Munich | 20 November 2025 | Stolte, Norbert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 1291

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2025

| Patent document cited in search report | | Publication date | Patent family member(s) | | Publication date |
|---|---|---|---|---|---|
| EP 0885500 | B1 | 25-05-2005 | AU | 715979 B2 | 10-02-2000 |
| | | | BR | 9708260 A | 13-04-1999 |
| | | | CN | 1219313 A | 09-06-1999 |
| | | | DE | 69733339 T2 | 03-11-2005 |
| | | | EE | 9800331 A | 15-04-1999 |
| | | | EP | 0885500 A1 | 23-12-1998 |
| | | | HK | 1018671 A1 | 30-12-1999 |
| | | | JP | 3762792 B2 | 05-04-2006 |
| | | | JP | 2000507423 A | 13-06-2000 |
| | | | MY | 121617 A | 28-02-2006 |
| | | | PL | 328967 A1 | 01-03-1999 |
| | | | WO | 9736395 A1 | 02-10-1997 |
| US 5422916 | A | 06-06-1995 | NONE | | |

EPO FORM P0459

For more details about this annex : see Official Journal of the European Patent Office, No. 12/82